(19) Europäisches Patentamt
European Patent Office
Office européen des brevets

(11) **EP 3 657 871 B1**

(12) **EUROPEAN PATENT SPECIFICATION**

(45) Date of publication and mention
of the grant of the patent:
**26.11.2025 Bulletin 2025/48**

(21) Application number: **18853787.2**

(22) Date of filing: **16.05.2018**

(51) International Patent Classification (IPC):
**H04L 5/00** (2006.01)   **H04L 1/00** (2006.01)
**H04L 27/26** (2006.01)

(52) Cooperative Patent Classification (CPC):
**H04L 5/001; H04L 1/0083; H04L 5/0053;**
**H04L 5/0092; H04L 27/26025**

(86) International application number:
**PCT/CN2018/087106**

(87) International publication number:
**WO 2019/047553 (14.03.2019 Gazette 2019/11)**

(54) **METHODS, DEVICES, CHIP AND COMPUTER STORAGE MEDIUM FOR TIME SLOT FORMAT INDICATION**

VERFAHREN, GERÄTE, CHIP UND COMPUTERSPEICHERMEDIUM ZUR
ZEITSCHLITZ-FORMATANZEIGE

PROCÉDÉS, DISPOSITIFS, PUCE ET SUPPORT DE STOCKAGE INFORMATIQUE D'INDICATION
DE FORMAT DE CRÉNEAU TEMPOREL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **08.09.2017 CN 201710808019**

(43) Date of publication of application:
**27.05.2020 Bulletin 2020/22**

(73) Proprietor: **Huawei Technologies Co., Ltd.**
**Longgang District**
**Shenzhen, Guangdong 518129 (CN)**

(72) Inventors:
• **XUE, Yifan**
**Shenzhen**
**Guangdong 518129 (CN)**
• **WANG, Da**
**Shenzhen**
**Guangdong 518129 (CN)**
• **WANG, Jian**
**Shenzhen**
**Guangdong 518129 (CN)**
• **LIU, Yun**
**Shenzhen**
**Guangdong 518129 (CN)**

(74) Representative: **MERH-IP Matias Erny Reichl**
**Hoffmann**
**Patentanwälte PartG mbB**
**Paul-Heyse-Straße 29**
**80336 München (DE)**

(56) References cited:
**EP-A1- 3 480 977      EP-A1- 3 606 225**
**EP-A1- 3 668 215      WO-A1-2011/085804**
**CN-A- 102 611 994      US-A1- 2011 105 137**
**US-A1- 2013 044 686**

• **LG ELECTRONICS: "Discussion on the contents**
**of group common PDCCH", vol. RAN WG1, no.**
**Prague, Czech Republic; 20170821 - 20170825,**
**20 August 2017 (2017-08-20), XP051315980,**
**Retrieved from the Internet <URL:http://**
**www.3gpp.org/ftp/Meetings_3GPP_SYNC/RAN1/**
**Docs/> [retrieved on 20170820]**
• **INTEL CORPORATION: "Group-common**
**PDCCH: Contents", 3GPP TSG RAN WG1**
**MEETING #90 R1-1712573, 25 May 2017**
**(2017-05-25), XP051315389**
• **INTEL CORPORATION: "Group-common**
**PDCCH: Physical structure", 3GPP TSG RAN**
**WG1 MEETING #90 R1-1712572, 25 May 2017**
**(2017-05-25), XP051315388**

## Description

## TECHNICAL FIELD

This application relates to the field of communications technologies, and in particular, to a slot format indication methods, devices, a chip and computer storage medium.

## BACKGROUND

In Long Term Evolution (long term evolution, LTE), it is stipulated that a component carrier (component carrier, CC) may have a maximum bandwidth of 20 MHz. However, as communications technologies continuously develop, the 20 MHz bandwidth cannot meet a requirement of a Long Term Evolution Advanced (long term evolution advanced, LTE-A) system for a downlink peak rate of 1 Gbps and an uplink peak rate of 500 Mbps. Therefore, a carrier aggregation (carrier aggregation, CA) technology is introduced.

Specifically, the CA technology means aggregating two or more CCs to support a larger transmission bandwidth. In the LTE-A system, one terminal device supports a maximum of five CCs. However, in a next-generation wireless communications (next radio, NR) system, one terminal device supports a maximum of 16 CCs in each of an uplink direction and a downlink direction.

However, after configuring a plurality of CCs for a terminal device, a base station further needs to indicate slot format information (slot format information, SFI) of each CC to the terminal device, so that the terminal device can send and receive data on the CC. In the prior art, generally, the base station indicates SFI of a CC to the terminal device in the following manner: When the base station configures a plurality of CCs for the terminal device, the base station adds slot format information (slot format information, SFI) of each CC into a group common physical downlink control channel (physical downlink control channel, PDCCH) on the CC, and sends the group common physical downlink control channel to the terminal device. Alternatively, the base station adds SFI of the plurality of CCs into a group common PDCCH on one of the plurality of CCs, and sends the group common PDCCH to the terminal device. For example, if the base station configures a CC 1, a CC 2, and a CC 3 for the terminal device, the base station may send SFI of the CC 1 to the terminal device by using a group common PDCCH on the CC 1, send SFI of the CC 2 to the terminal device by using a group common PDCCH on the CC 2, and send SFI of the CC 3 to the terminal device by using a group common PDCCH on the CC 3; or the base station sends SFI of the CC 1, SFI of the CC 2, and SFI of the CC 3 to the terminal device by using a group common PDCCH on one of the CC 1, the CC 2, and the CC 3. In the foregoing manner of indicating the slot format to the terminal device, because the SFI of each CC is separately indicated, relatively large signaling overheads are easily caused.

In LG Electronics: "Discussion on the contents of group common PDCCH", 3GPP DRAFT; R1-1713171 DISCUSSION ON THE CONTENTS OF GROUP COMMON PDCCH, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX, vol. RAN WG1, no. Prague, Czech, Republic; 20170821 - 20170825 20 August 2017 (2017-08-20), XP051315980, it is shown that CCs are grouped and the slot format indication can be delivered to group at once. In the CC grouping, one CC of the group is defined and the slot format indication is transmitted through the CC. A group common PDCCH can dedicate slot structure based on a reference numerology.

## SUMMARY

Embodiments of the present invention provide a slot format indication method, a device, and a system, to help reduce signaling overheads to some extent during slot format indication. The object of the invention is solved by the independent claims. The dependent claims refer to embodiments of the invention.

## BRIEF DESCRIPTION OF DRAWINGS

FIG. 1 is a schematic diagram of a slot format according to an embodiment of this application;
FIG. 2a and FIG. 2b are schematic architectural diagrams of a communications system applied to an embodiment of this application;
FIG. 3 is a schematic flowchart of a slot format indication method according to an embodiment of this application;
FIG. 4a and FIG. 4b are schematic structural diagrams of first indication information according to an embodiment of this application;
FIG. 5 is a schematic diagram of a slot format according to an embodiment of this application;
FIG. 6 is a schematic diagram of a slot format combination according to an embodiment of this application;
FIG. 7a and FIG. 7b are schematic structural diagrams of a network device according to an embodiment of this application;
FIG. 8a and FIG. 8b are schematic structural diagrams of a terminal device according to an embodiment of this application; and
FIG. 9 is a schematic structural diagram of a communications system according to an embodiment of this application.

## DESCRIPTION OF EMBODIMENTS

The following describes the embodiments of this application in detail with reference to the accompanying drawings in this specification.

In the embodiments of this application, CCs whose configuration parameters have at least one type of same parameter may be indicated to a terminal device by using one slot format in K slot formats indicated by first indication information. Therefore, compared with a manner of separately indicating a slot format of each CC, it helps reduce signaling overheads of slot format indication information to some extent.

It should be understood that, a network device in the embodiments of this application may be a base station or an access point, or may be a device that is in an access network and communicates with a wireless terminal over an air interface by using one or more sectors. When the network device is a base station, the base station may be configured to mutually convert a received over-the-air frame and an Internet Protocol (internet protocol, IP) packet, and serve as a router between the wireless terminal and a remaining part of the access network, where the remaining part of the access network may include an IP network. The base station may be further configured to coordinate attribute management of the air interface. For example, the base station may be a base transceiver station (base transceiver station, BTS) in a Global System for Mobile Communications (global system for mobile communication, GSM) or a Code Division Multiple Access (code division multiple access, CDMA) system, or may be a NodeB (nodeB) in a Wideband Code Division Multiple Access (wideband code division multiple access, WCDMA) system, or may be an evolved NodeB (evolutional nodeB, eNB) in a Long Term Evolution (long term evolution, LTE) system, or may be a 5th generation (5th generation, 5G) mobile communications technology node (gnodeB, gNB) in a next-generation wireless communications (next radio, NR) system. This is not limited in the embodiments of this application.

It should be understood that, a terminal device in the embodiments of this application may be a device configured to provide voice and/or data connectivity for a user, a handheld device with a wireless connection function, or another processing device connected to a wireless modem. The terminal device in the embodiments of this application may also be a wireless terminal. The wireless terminal may communicate with one or more core networks by using a radio access network (radio access network, RAN). The wireless terminal may be a mobile terminal, such as a mobile phone (also referred to as a "cellular" phone) or a computer with a mobile terminal. For example, the computer with a mobile terminal may be a portable, pocket-sized, handheld, computer built-in, or in-vehicle mobile apparatus which exchanges voice and/or data with the radio access network. For example, the wireless terminal may be a device such as a personal communication service (personal communication service, PCS) phone, a cordless phone, a Session Initiation Protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit), a subscriber station (subscriber station), a mobile station (mobile station), a mobile console (mobile), a remote station (remote station), an access point (access point, AP), a remote terminal (remote terminal), an access terminal (access terminal), a user terminal (user terminal), a user agent (user agent), a user device (user device), user equipment (user equipment), or the like. This is not limited in the embodiments of this application.

It should be understood that a slot in the embodiments of this application is also referred to as a slot, and is a time domain unit of a resource used for transmitting data. One slot usually includes a plurality of symbols/chips, and the symbols/chips may have a same transmission direction or different transmission directions.

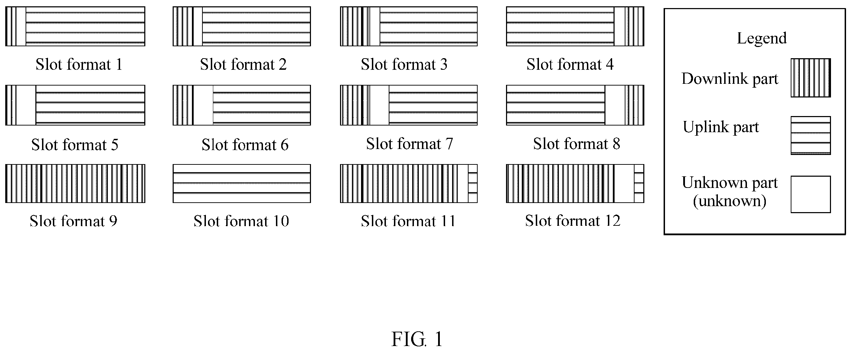

It should be understood that the slot format in the embodiments of this application is also referred to as a slot format, and is used to indicate information such as a quantity of symbols/chips included in a slot, a symbol size, content carried on each symbol/chip in a slot, and a transmission direction on each symbol/chip. For example, assuming that one slot includes 14 symbols, possible slot formats may be shown in FIG. 1. The slot formats shown in FIG. 1 are only used as an example for description. In an actual communications system, only some or all of the slot formats shown in FIG. 1 may be used, or slot formats of other types different from the slot formats shown in FIG. 1 may be used. This is not limited in the embodiments of this application.

It should be understood that the configuration parameter in the embodiments of this application may also be referred to as numerology, and includes at least one of the following parameters: a subcarrier spacing (subcarrier spacing), a cyclic prefix (cyclic prefix, CP), a bandwidth, or a frequency band. It should be noted that the configuration parameter may further include another parameter such as a quantity of fast Fourier transformation (fast fourier transformation, FFT) points. This is not limited in the embodiments of this application. The symbol size varies with the configuration parameter. The subcarrier spacing is used as an example. If the subcarrier spacing is 15 kilohertz (KHz), the symbol size is 1/15000 seconds (s). If the subcarrier spacing is 30 KHz, the symbol size is 1/30000s. In NR, generally, when the subcarrier spacing is less than or equal to 60 KHz, a quantity of symbols included in each slot is 7 or 14; or when the subcarrier spacing is greater than 60 KHz, a quantity of symbols included in each slot is 14.

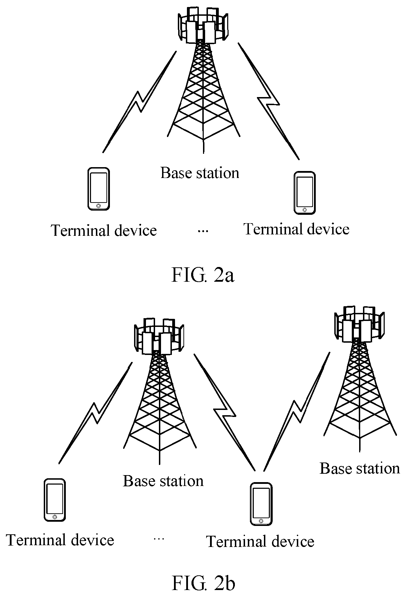

It should be understood that the embodiments of this application may be applied to a communications system such as an NR system, an LTE system, an LTE-A system, or an enhanced Long Term Evolution (enhanced long term evolution-advanced, eLTE), and may be further applied to a related cellular system such as Wireless Fidelity (wireless fidelity, WiFi), Worldwide Interoperability for Microwave Access (worldwide interoperability for microwave access, WiMAX), or a 3rd Generation Partnership Project (3rd generation partnership project, 3GPP). Specifically, an architecture of a communications system applied to the embodiments of this application may be shown in FIG. 2a, where one terminal device is connected to one base station, and one base station manages a plurality of terminal devices. It should be noted that, a quantity of terminal devices in the communications system shown in FIG. 2a is not limited in the embodiments of this application. Alternatively, an architecture of a communications system applied to the embodiments of this application may be shown in FIG. 2b, where one terminal device is connected to a plurality of base stations, and one base station manages a plurality of terminal devices. It should be noted that, a quantity of base stations and a quantity of terminal devices in the communications system shown in FIG. 2b are not limited in the embodiments of this application.

That the network device is a base station is used as an example in the following to describe in detail a slot format indication method in the embodiments of this application. A slot format indication method used when the network device is another device is similar to the slot format indication method used when the network device is a base station. Details are not described herein.

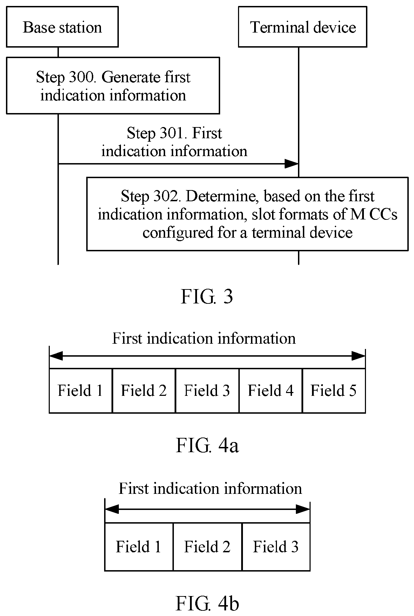

As shown in FIG. 3, a slot format indication method in an embodiment of this application includes the following steps.

Step 300. A base station generates first indication information, where the first indication information indicates K slot formats, the K slot formats are slot formats of M CCs configured for a terminal device, at least one slot format in the K slot formats is corresponding to at least two CCs in the M CCs, configuration parameters of the at least two CCs have at least one type of same parameter, K is an integer greater than or equal to 1, and M is an integer greater than or equal to 1 and less than or equal to K.

The configuration parameter includes at least one of the following parameters: a subcarrier spacing, a cyclic prefix, a bandwidth, or a frequency band.

Step 301. The base station sends the first indication information to the terminal device.

Step 302. After receiving the first indication information sent by the base station, the terminal device determines the slot formats of the M CCs based on the first indication information.

For example, the configuration parameter includes a subcarrier spacing and a cyclic prefix. It is assumed that in a configuration parameter of a CC 1, a subcarrier spacing is 15 KHz and a cyclic prefix is a normal cyclic prefix; and in a configuration parameter of a CC 2, a subcarrier spacing is 15 KHz and a cyclic prefix is an extended cyclic prefix. In this case, the subcarrier spacing in the configuration parameter of the CC 1 is the same as the subcarrier spacing in the configuration parameter of the CC 2. Therefore, the configuration parameters of the CC 1 and the CC have one type of same parameter. The configuration parameter includes a subcarrier spacing, a cyclic prefix, and a bandwidth. It is assumed that in a configuration parameter of a CC 1, a subcarrier spacing is 15 KHz, a cyclic prefix is a normal cyclic prefix, and a bandwidth is A; and in a configuration parameter of a CC 2, a subcarrier spacing is 15 KHz, a cyclic prefix is a normal cyclic prefix, and a bandwidth is B, where A is not equal to B. In this case, the subcarrier spacing in the configuration parameter of the CC 1 is the same as the subcarrier spacing in the configuration parameter of the CC 2, and the cyclic prefix in the configuration parameter of the CC 1 is the same as the cyclic prefix in the configuration parameter of the CC 2. Therefore, the configuration parameters of the CC 1 and the CC have two types of same parameters.

The following describes this embodiment of this application based on the following communications scenario.

It is assumed that a terminal device a, a terminal device b, a terminal device c, a terminal device d, and terminal device f are included in coverage of the base station. The base station configures three CCs for the terminal device a: a CC 1, a CC 2, and a CC 3. The base station configures two CCs for the terminal device b: a CC 4 and a CC 5. The base station configures four CCs for the terminal device c: a CC 6, a CC 7, a CC 8, and a CC 9. The base station configures one CC for the terminal device d: a CC 10. The base station configures two CCs for the terminal device f: a CC 11 and a CC 12. The CC 1 to the CC 12 may be contiguous frequency domain resources, or may be non-contiguous frequency domain resources. This is not limited in this embodiment of this application.

Case 1: The base station separately sends the first indication information to different terminal devices. Specifically, the base station may divide, into one group, CCs that are configured for a same terminal device. The terminal device c is used as an example. It is assumed that the configuration parameter is a subcarrier spacing. If a subcarrier spacing of the CC 6, a subcarrier spacing of the CC 7, and a subcarrier spacing of the CC 8 are 15 KHz, and a subcarrier spacing of the CC 9 is 30 KHz, the first indication information may indicate one slot format corresponding to 15 KHz and one slot format corresponding to 30 KHz. The slot format corresponding to 15 KHz is used to indicate slot formats of the CC 6, the CC 7, and the CC 8, and the slot format corresponding to 30 KHz is used to indicate a slot format of the CC 9. Alternatively, the first indication information may indicate two slot formats corresponding to 15 KHz and one slot format corresponding to 30 KHz. One slot format corresponding to 15 KHz may be used to indicate slot formats of two of the CC 6, the CC 7, and the CC 8, and the other slot format corresponding to 15 KHz is used to indicate a slot format of the remaining one of the CC 6, the CC 7, and the CC 8. If a subcarrier spacing of the CC 6 is 15 KHz, a subcarrier spacing of the CC 7 is 30 KHz, a subcarrier spacing of the CC 8 is 60 KHz, and a subcarrier spacing of the CC 9 is 120 KHz, the first indication information indicates a slot format corresponding to 15 KHz, a slot format corresponding to 30 KHz, a slot format corresponding to 60 KHz, and a slot format corresponding to 120 KHz.

Case 2: The base station may alternatively divide, into one or more groups, CCs that are in the CCs configured for the terminal device a, the terminal device b, the terminal device c, and the terminal device d and whose configuration parameters have at least one type of same configuration parameter. A specific quantity of groups obtained through division is determined by the base station. Generally, the quantity of groups obtained through division is not greater than a total quantity of the CCs whose configuration parameters have at least one type of same configuration parameter. It is assumed that the configuration parameter includes a subcarrier spacing and a cyclic prefix. If a subcarrier spacing of the CC 1, a subcarrier spacing of the CC 4, and a subcarrier spacing of the CC 6 are all 15 KHz, the first indication information indicates a slot format corresponding to 15 KHz.

In addition, the base station may divide, in another manner, the CCs configured for the terminal device a, the terminal device b, the terminal device c, and the terminal device d, and details are not described herein. When division is performed in another manner, it is assumed that the CC 1, the CC 3, the CC 4, and the CC 7 belong to one group. A subcarrier spacing of the CC 1 is 15 KHz, a subcarrier spacing of the CC 3 is 60 KHz, and both a subcarrier spacing of the CC 4 and a subcarrier spacing of the CC 7 are 60 KHz. In this case, slot format indication information of the group of CCs is used to indicate a slot format corresponding to 15 KHz, a slot format corresponding to 30 KHz, and a slot format corresponding to 60 KHz. In a specific implementation, the first indication information is the slot format indication information of the group of CCs. In another implementation, because the base station configures only the CC 1 for the terminal device a, the slot format corresponding to 60 KHz and the slot format corresponding to 30 KHz are redundant information for the terminal device a, and the base station needs to send, to the terminal device a, only the first indication information in the slot format indication information corresponding to the group of CCs, where the first indication information indicates the slot format corresponding to 15 KHz.

It should be further noted that, in this embodiment of this application, division performed by the base station on the CCs may be UE common, that is, division performed by the base station on the CCs is the same for all terminal devices in the coverage of the base station. For example, if the base station divides the CC 1 and the CC 2 into one group, the CC 1 and the CC 2 belong to one group for the terminal device a, and the CC 1 and the CC 2 also certainly belong to one group for the terminal device b. In this embodiment of this application, division performed by the base station on the CCs may be UE specific, that is, if the CC 1 and the CC 2 belong to one group for the terminal device a, the CC 1 and the CC 2 may belong to different CC groups for the terminal device b.

Specifically, the base station may notify the terminal devices of division information of the CCs (for example, how the base station divides the CCs) by using radio resource control (radio resource control, RRC) signaling or Media Access Control (media access control, MAC) signaling.

In this embodiment of this application, a possible implementation in which the first indication information indicates K slot formats is as follows:
The first indication information includes H fields, and each of K fields in the H fields indicates one slot format in the K slot formats, where H is a positive integer greater than or equal to K. For example, it is assumed that the first indication information indicates three slot formats: a slot format 1, a slot format 2, and a slot format 3. A subcarrier spacing 15 KHz is corresponding to the slot format 1, a subcarrier spacing 30 KHz is corresponding to the slot format 2, and a subcarrier spacing 60 KHz is corresponding to the slot format 3. If H is a total type quantity of subcarrier spacings, for example, the total type quantity of subcarrier spacings is 5, and specific subcarrier spacings may be 15 KHz, 30 KHz, 60 KHz, 120 KHz, and 240 KHz, a value of H may be 5. As shown in FIG. 4a, a field 1 is corresponding to 15 KHz, a field 2 is corresponding to 30 KHz, a field 3 is corresponding to 60 KHz, a field 4 is corresponding to 120 KHz, and a field 5 is corresponding to 240 KHz. In this case, the field 1 is used to indicate the slot format 1, the field 2 is used to indicate the slot format 2, the field 3 is used to indicate the slot format 3, and the field 4 and the field 5 are empty, or the field 4 indicates a slot format corresponding to the subcarrier spacing 120 KHz, and the field 5 indicates a slot format corresponding to the subcarrier spacing 240 KHz. Alternatively, H may be a total type quantity of parameters of the K slot formats. It is assumed that the first indication information indicates three slot formats: a slot format 1, a slot format 2, and a slot format 3. A subcarrier spacing 15 KHz is corresponding to the slot format 1, a subcarrier spacing 30 KHz is corresponding to the slot format 2, and a subcarrier spacing 60 KHz is corresponding to the slot format 3. As shown in FIG. 4b, a field 1 is corresponding to 15 KHz, a field 2 is corresponding to 30 KHz, and a field 3 is corresponding to 60 KHz. In this case, the field 1 is used to indicate the slot format 1, the field 2 is used to indicate the slot format 2, and the field 3 is used to indicate the slot format 3.

In this embodiment of this application, the value of H, a parameter corresponding to each of the H fields, and one or more configurable slot formats may be preconfigured by the base station for the terminal device, or may be predefined. Specifically, the base station sends first configuration information to the terminal device, and the first configuration information includes or indicates at least one of the following information: the value of H, the parameter corresponding to each of the H field, or the one or more configurable slot formats.

For example, if the value of H is predefined, the base station does not need to notify the terminal device by using the first configuration information.

Notifying the terminal device of the one or more configurable slot formats helps reduce signaling overheads. For example, it is assumed that a total type quantity of slot formats is W. The subcarrier spacing is used as an example. If only A types of slot formats in the W types of slot formats can be configured when the subcarrier spacing is 15 KHz, where A is less than W, when the base station does not notify the terminal device of the one or more configurable slot formats, or the one or more configurable slot formats are predefined, a length of 15 KHz in a corresponding field is $\lceil \log W \rceil$ ; or when the base station notifies the terminal device of the one or more configurable slot formats, or the one or more configurable slot formats are predefined, a length of 15 KHz in a corresponding field is $\lceil \log A \rceil$ . Because A is less than W, signaling overheads of the first indication information are reduced.

In addition, this embodiment of this application further provides an implementation of the first indication information according to the invention:

The first indication information indicates a first slot format combination manner, where the first slot combination manner is a combination of slot formats corresponding to K types of parameters, and K is a type quantity of parameters corresponding to the M CCs.

For example, the parameter is a subcarrier spacing. If a total type quantity of subcarriers corresponding to the M CCs is 2, the subcarrier spacings are a subcarrier spacing 15 KHz and a subcarrier spacing 30 KHz. If possible combination manners of slot formats corresponding to 15 KHz and 30 KHz are: {slot format 1, slot format 2}, {slot format 2, slot format 3}, and {slot format 4, slot format 5}, and in the M CCs, a slot format of a CC with 15 KHz is the slot format 4 and a slot format of a CC with 30 KHz is the slot format 5, the first indication information indicates a first slot format combination manner {slot format 4, slot format 5}. In this embodiment of this application, the three combination manners are separately encoded. For example, 00 indicates the slot format combination manner {slot format 1, slot format 2}, 01 indicates the slot format combination manner {slot format 2, slot format 3}, and 11 indicates the slot format combination manner {slot format 4, slot format 5}. In this case, the first indication information is 11. This technical solution helps further reduce signaling overheads of the first indication information. The slot format combination manner and an encoding manner, such as 00 and 01, of the slot format combination manner may be notified to the terminal device by using RRC signaling or MAC signaling.

It should be noted that in the foregoing two implementations of the first indication information, a size of a slot varies with a subcarrier spacing. For example, a slot corresponding to a subcarrier spacing 15 KHz is twice a slot corresponding to a subcarrier spacing 30 KHz. In this case, if the first indication information indicates a slot format 1 and a slot format 2, where the slot format 1 is a slot format corresponding to the subcarrier spacing 15 KHz and the slot format 2 is a slot format corresponding to the subcarrier spacing 30 KHz, assuming that a subcarrier spacing of a CC 1 is 15 KHz and a subcarrier spacing of a CC 2 is 30 KHz, a slot format of the CC 1 in the slot corresponding to 15 KHz is the slot format 1, the CC 2 includes two slots corresponding to 30 KHz in a time period of the slot corresponding to 15 KHz, and therefore a slot format of the CC 2 in each of the two slots corresponding to 30 KHz is the slot format 2.

In this embodiment of this application, to avoid mutual interference between uplink and downlink, in slot formats of all CCs included in the M CCs, transmission directions at a same time domain location do not include both an uplink direction and a downlink direction.

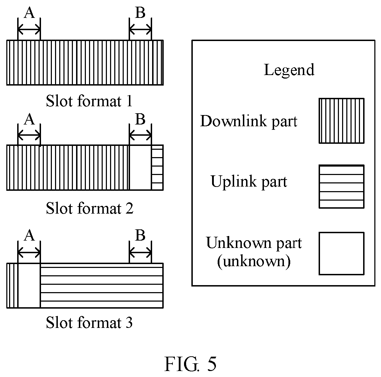

Slot formats shown in FIG. 5 are used as an example. A slot format 1 has a downlink transmission direction at a time domain location A, a slot format 2 has a downlink transmission direction at the time domain location A, and a slot format 3 has an unknown transmission direction at the time domain location A. In this case, for the slot format 1, the slot format 2, and the slot format 3, the transmission directions at the time domain location A do not include both an uplink direction and a downlink direction. The slot format 1 has a downlink transmission direction at a time domain location B, the slot format 2 has an unknown transmission direction at the time domain location B, and the slot format 3 has an uplink transmission direction at the time domain location B. In this case, the transmission direction at the time domain location B in the slot format 1 and the transmission direction at the time domain location B in the slot format 3 include both an uplink direction and a downlink direction. Therefore, the slot formats included in the M CCs do not include both the slot format 1 and the slot format 3. The slot format 2 at the time domain location B and the slot format 1 at the time domain location B do not include both an uplink direction and a downlink direction, and the slot format 2 at the time domain location B and the slot format 3 at the time domain location B do not include both an uplink direction and a downlink direction.

In addition, when in the slot formats of all the CCs included in the M CCs, transmission directions at a same time domain location do not include both an uplink direction and a downlink direction, this embodiment of this application further provides an implementation of the first indication information.

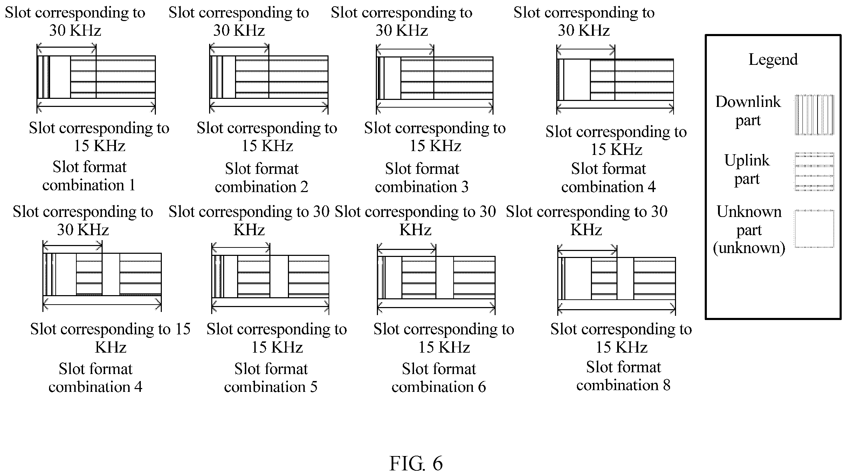

Specifically, it is assumed that all possible slot formats corresponding to a subcarrier spacing 15 KHz are shown in FIG. 1. If M is 2, the M CCs are specifically a CC 1 and a CC 2. It is assumed that a subcarrier spacing of the CC 1 is 15 KHz and a subcarrier spacing of the CC 2 is 30 KHz. If a slot format of the CC 1 is a slot format 6 shown in FIG. 1, possible combinations shown in FIG. 6 exist when in slot formats of the CC 2 in the first slot corresponding to 30 KHz and the second slot corresponding to 30 KHz in a slot corresponding to 15 KHz, transmission directions at a same time domain location do not include both an uplink direction and a downlink direction. When the slot formats of the CC 2 in the first slot corresponding to 30 KHz and the second slot corresponding to 30 KHz are a combination (5) shown in FIG. 6, the combination (5) and the slot format 6 may be combined and encoded, and notified to the terminal device; or the slot formats of the CC 1 and the CC 2 may be notified to the terminal device by using two fields. Specifically, one field indicates the slot format 6, and the other field indicates a combination manner of the slot formats of the CC 2 in the first slot corresponding to 30 KHz and the second slot corresponding to 30 KHz. In addition, in this embodiment of this application, a slot format of a CC configured for the terminal device may be further indicated to the terminal device in another manner. This is not limited in this embodiment of this application.

In this embodiment of this application, that the base station sends the first indication information to the terminal device may be implemented in the following manner:

The base station sends the first indication information on N CCs in the M CCs, where N is an integer greater than or equal to 1, and N is less than or equal to M.

For example, when N=1, the base station may send the first indication information to the terminal device on one CC in the M CCs. Specifically, the base station sends the first indication information on a group common PDCCH on the CC. It should be further noted that the CC in the M CCs may be predefined; or N=1 may be predefined, and then the base station notifies the terminal device of a specific CC, in the M CCs, on which the first indication information is sent; or the base station may notify the terminal device of a value of N and a specific CC on which the first indication information is sent. For example, the base station sends second configuration information to the terminal device, and the second configuration information includes a CC selected from the M CCs and a quantity of CCs on which the first indication information is sent. Because the first indication information is sent only on one CC in this technical solution, it helps reduce a quantity of times of blind detection performed by the terminal device.

For example, a value of N may be greater than 1 and less than M, and the base station sends the first indication information on each of the N CCs. Compared with a manner of sending the first indication information on each of the M CCs, in this manner, a quantity of times of blind detection is reduced to some extent, and it helps improve reliability of receiving the first indication information by the terminal device. In this case, to enable the terminal device to determine CCs on which the base station sends the first indication information, a specific implementation thereof is similar to that existing when the value of N is 1, and details are not described herein again.

For example, a value of N may be M, and the base station sends the first indication information on each of the M CCs. In this case, a quantity of CCs on which the first indication information is sent and the M CCs may be notified to the terminal device in a predefining or notification manner. In this manner, reliability of receiving the first indication information by the terminal device is improved to a largest extent. When N=M, a specific implementation in which the terminal device determines specific CCs on which the base station sends the first indication information may be similar to that existing when the value of N is 1. In addition, when N=M is predefined, the second configuration information may not include the M CCs. A reason is that after determining that N=M, the terminal device may determine to receive the first indication information on all the CCs, and no additional indication needs to be provided.

In addition, in this embodiment of this application, when the value of N is greater than 1, a part of the first indication information may be sent on some of the N CCs, and one piece of complete first indication information includes N parts of the first indication information. Specifically, the base station sends a part of the first indication information on each of the N CCs, and the first indication information includes N parts of the first indication information. For example, it is assumed that the value of N is 2, and the N CCs are a CC 1 and a CC 2. The first indication information is divided into two parts. One part is sent to the terminal device on the CC 1, and the other part is sent to the terminal device on the CC 2. In this case, CCs on which the base station sends the first indication information and a quantity of the CCs on which the base station sends the first indication information may be sent to the terminal device by using the second configuration information.

Based on a same concept, an embodiment of this application further provides a network device, configured to perform an action or a function of the network device in the foregoing method embodiment.

Based on a same concept, an embodiment of this application further provides a terminal device, configured to perform an action or a function of the terminal device in the foregoing method embodiment.

An embodiment of the present invention further provides a communications system, including the network device and the terminal device in the foregoing embodiment.

For brevity, for a specific implementation of content of the apparatus part, refer to the method embodiment, and details are not described again.

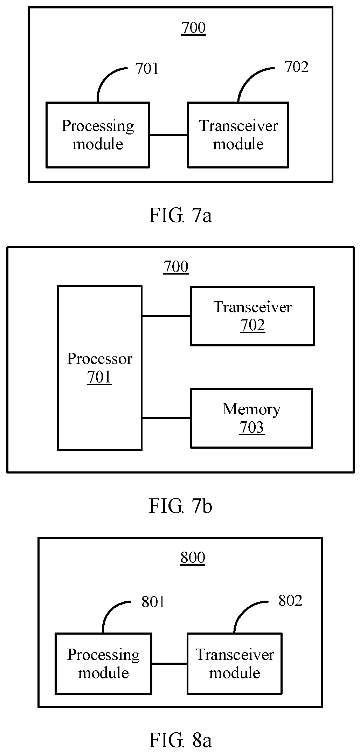

As shown in FIG. 7a, a network device 700 in an embodiment of this application includes a processing module 701 and a transceiver module 702. The processing module 701 is configured to generate first indication information. The transceiver module is configured to send the first indication information to a terminal device. The first indication information indicates K slot formats. The K slot formats are slot formats of M CCs configured for the terminal device. At least one slot format in the K slot formats is corresponding to at least two CCs in the M CCs. Configuration parameters of the at least two CCs have at least one type of same parameter. K is an integer greater than or equal to 1 and less than or equal to M, and M is an integer greater than 1. The configuration parameter includes at least one of the following parameters: a subcarrier spacing, a cyclic prefix, a bandwidth, or a frequency band.

In specific implementation, a possible design of the first indication information is as follows: The first indication information includes H fields, and each of K fields in the H fields indicates one slot format in the K slot formats, where H is a positive integer greater than or equal to K.

To help the terminal device accurately read the first indication information, a possible design is as follows: The transceiver module 702 is configured to: after sending first configuration information to the terminal device, send the first indication information to the terminal device, where the first configuration information includes or indicates at least one of the following information:

a value of H, a parameter corresponding to each of the H fields, and one or more configurable slot formats.

In the implementation according to the invention, a design of the first indication information is as follows: The first indication information indicates a first slot format combination manner, where the first slot format combination manner is a combination of slot formats corresponding to K types of parameters, and K is a type quantity of parameters corresponding to the M CCs.

In specific implementation, a possible design in which the transceiver module 702 is configured to send the first indication information to the terminal device in this embodiment of this application is as follows: The transceiver module 702 is configured to send the first indication information on N CCs in the M CCs, where N is an integer greater than or equal to 1, and N is less than or equal to M. When a value of N is 1, the foregoing technical solution helps reduce a quantity of times of blind detection performed by the terminal device, thereby reducing power consumption. When a value of N is greater than 1 and less than M, the foregoing technical solution helps reduce to some extent a quantity of times of blind detection performed by the terminal device, and improve reliability of transmitting the first indication information. When a value of N is M, the foregoing technical solution can improve reliability of transmitting the first indication information to a largest extent.

It should be noted that, generally, the transceiver module 702 sends the first indication information on group common PDCCHs on the N CCs.

Specifically, a possible design in which the transceiver module 702 is configured to send the first indication information on the N CCs in the M CCs is as follows: The transceiver module 702 is configured to send the first indication information on each of the N CCs, that is, send one piece of complete first indication information on each of the N CCs. Another possible design is as follows: The transceiver module 702 is configured to send a part of the first indication information on each of the N CCs, where one piece of complete first indication information includes N parts of the first indication information.

In addition, in this embodiment of this application, to enable the terminal device to determine a quantity of CCs on which the first indication information is transmitted and a specific CC on which the first indication information is transmitted, in a possible design, the transceiver module 702 is configured to send second configuration information to the terminal device, where the second configuration information is used to configure N and the N CCs.

In a possible design, in slot formats of all CCs included in the M CCs, transmission directions at a same time domain location do not include both an uplink direction and a downlink direction. The foregoing technical solution helps avoid mutual interference between uplink and downlink, and further helps reduce signaling overheads of the first indication information.

FIG. 7b is a schematic diagram of a hardware structure of the network device 700 shown in FIG. 7a, including a processor 710, a transceiver 720, and a memory 730. A hardware entity corresponding to the processing module 701 in the network device 700 is the processor 710, and a hardware entity corresponding to the transceiver module 702 is the transceiver 720. Specifically, the transceiver 720 includes a receiver and a transmitter. The memory 730 may be configured to store a program/code pre-installed when the terminal device is at delivery, or may be configured to store code or the like executed by the processor 710.

The processor 710 may be a general purpose central processing unit (central processing unit, CPU), a microprocessor, an application-specific integrated circuit (application specific integrated Circuit, ASIC), or one or more integrated circuits, and is configured to perform a related operation, to implement the technical solutions provided in the embodiments of this application.

It should be noted that, although only the processor 710, the transceiver 720, and the memory 730 are shown in the network device 700 shown in FIG. 7b, in a specific implementation process, persons skilled in the art should understand that the network device 700 further includes another component required for implementing normal running. In addition, persons skilled in the art should understand that, based on a specific requirement, the network device 700 may further include a hardware component for implementing another additional function. In addition, persons skilled in the art should understand that the network device 700 may include only components or modules required for implementing this embodiment of this application, but not necessarily include all the components shown in FIG. 7b.

Persons of ordinary skill in the art may understand that all or some of the processes of the methods in the embodiments may be implemented by a computer program instructing relevant hardware. The program may be stored in a computer readable storage medium. When the program is executed, the processes of the methods in the embodiments are performed. The foregoing storage medium may be a magnetic disk, an optical disc, a read-only memory (read-only memory, ROM), a random access memory (random access memory, RAM), or the like.

As shown in FIG. 8a, a terminal device 800 in an embodiment of this application includes a processing module 801 and a transceiver module 802. The transceiver module 802 is configured to receive first indication information sent by a network device. The processing module 801 is configured to determine slot formats of M CCs based on the first indication information. The first indication information indicates K slot formats. The K slot formats are the slot formats of the M CCs configured for the terminal device. At least one slot format in the K slot formats is corresponding to at least two CCs in the M CCs. Configuration parameters of the at least two CCs have at least one type of same parameter. K is an integer greater than or equal to 1 and less than or equal to M, and M is an integer greater than 1. The configuration parameter includes at least one of the following parameters: a subcarrier spacing, a cyclic prefix, a bandwidth, or a frequency band.

In specific implementation, a possible design of the first indication information is as follows: The first indication information includes H fields, and each of K fields in the H fields indicates one slot format in the K slot formats, where H is a positive integer greater than or equal to K.

To help the terminal device accurately read the first indication information, a possible design is as follows: The transceiver module 802 is configured to: after receiving first configuration information sent by the network device, receive the first indication information sent by the network device, where the first configuration information includes or indicates at least one of the following information:

a value of H, a parameter corresponding to each of the H fields, and one or more configurable slot formats.

In the implementation according to the invention, a design of the first indication information is as follows: The first indication information indicates a first slot format combination manner, where the first slot format combination manner is a combination of slot formats corresponding to K types of parameters, and K is a type quantity of parameters corresponding to the M CCs.

In specific implementation, a possible design in which the transceiver module 802 is configured to receive the first indication information sent by the network device in this embodiment of this application is as follows: The transceiver module 802 is configured to receive the first indication information sent by the network device on N CCs in the M CCs, where N is an integer greater than or equal to 1, and N is less than or equal to M. When a value of N is 1, the foregoing technical solution helps reduce a quantity of times of blind detection performed by the terminal device, thereby reducing power consumption. When a value of N is greater than 1 and less than M, the foregoing technical solution helps reduce to some extent a quantity of times of blind detection performed by the terminal device, and improve reliability of transmitting the first indication information. When a value of N is M, the foregoing technical solution can improve reliability of transmitting the first indication information to a largest extent.

Specifically, a possible design in which the transceiver module 802 is configured to receive the first indication information sent by the network device on the N CCs in the M CCs is as follows: The transceiver module 802 is configured to receive the first indication information sent by the network device on each of the N CCs, that is, the network device sends one piece of complete first indication information on each of the N CCs. Another possible design is as follows: The transceiver module 802 is configured to receive a part of the first indication information sent by the network device on each of the N CCs, where one piece of complete first indication information includes N parts of the first indication information.

In addition, in this embodiment of this application, to enable the terminal device to determine a quantity of CCs on which the first indication information is transmitted and a specific CC on which the first indication information is transmitted, in a possible design, the transceiver module 802 is further configured to receive second configuration information sent by the network device, where the second configuration information is used to configure N and the N CCs.

In a possible design, in slot formats of all CCs included in the M CCs, transmission directions at a same time domain location do not include both an uplink direction and a downlink direction. The foregoing technical solution helps avoid mutual interference between uplink and downlink, and further helps reduce signaling overheads of the first indication information.

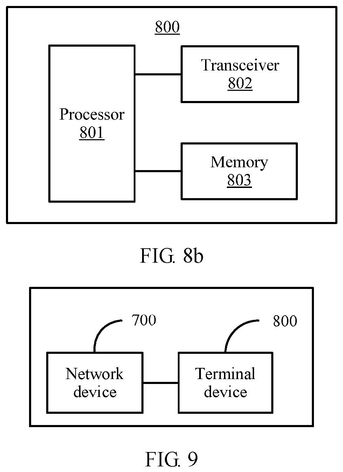

FIG. 8b is a schematic diagram of a hardware structure of the terminal device 800 shown in FIG. 8a, including a processor 810, a transceiver 820, and a memory 830. A hardware entity corresponding to the processing module 801 in the terminal device 800 is the processor 810, and a hardware entity corresponding to the transceiver module 802 is the transceiver 820. Specifically, the transceiver 820 includes a receiver and a transmitter. The memory 830 may be configured to store a program/code pre-installed when the terminal device is at delivery, or may be configured to store code or the like executed by the processor 810.

The processor 810 may be a general purpose CPU, a microprocessor, an ASIC, or one or more integrated circuits, and is configured to perform a related operation, to implement the technical solutions provided in the embodiments of this application.

It should be noted that, although only the processor 810, the transceiver 820, and the memory 830 are shown in the terminal device 800 shown in FIG. 8b, in a specific implementation process, persons skilled in the art should understand that the terminal device 800 further includes another component required for implementing normal running. In addition, persons skilled in the art should understand that, based on a specific requirement, the terminal device 800 may further include a hardware component for implementing another additional function. In addition, persons skilled in the art should understand that the terminal device 800 may include only components or modules required for implementing this embodiment of this application, but not necessarily include all the components shown in FIG. 8b.

Persons of ordinary skill in the art may understand that all or some of the processes of the methods in the embodiments may be implemented by a computer program instructing relevant hardware. The program may be stored in a computer readable storage medium. When the program is executed, the processes of the methods in the embodiments are performed. The foregoing storage medium may be a magnetic disk, an optical disc, a ROM, a RAM, or the like.

As shown in FIG. 9, a communications system in an embodiment of this application includes the network device 700 and the terminal device 800.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, and an optical memory) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

**Claims**

1. A slot format indication method, wherein the method comprises:

    Receiving, by a terminal device (800), first indication information sent by a network device (700), wherein the first indication information indicates K slot formats, the K slot formats are slot formats of M component carriers CCs configured for the terminal device (800), and K is an integer greater than or equal to 1 and less than or equal to M, M is an integer greater than 1; and
    Determining by the terminal device (800), the slot formats of the M CCs based on the first indication information,
    **characterized in that**
    at least one slot format in the K slot formats is corresponding to at least two CCs in the M CCs, configuration parameters of the at least two CCs have at least one type of same parameter, and the configuration parameters comprise at least one of the following parameters: a subcarrier spacing, a cyclic prefix, a bandwidth, or a frequency band,
    whereby the first indication information indicates a first slot format combination manner, wherein the first slot format combination manner is a combination of slot formats corresponding to K types of parameters, and K is a type quantity of parameters corresponding to the M CCs.

**2.** The method according to claim 1, wherein that the first indication information indicates K slot formats comprises:

the first indication information comprises H fields, and each of K fields in the H fields indicates one slot format in the K slot formats, wherein H is a positive integer greater than or equal to K.

**3.** The method according to claim 2, before the receiving, by a terminal device (800), first indication information sent by the network device (700), further comprising:

receiving, by the terminal device (800), first configuration information sent by the network device (700), wherein the first configuration information comprises or indicates at least one of the following information: a value of H, a parameter corresponding to each of the H fields, and one or more configurable slot formats.

**4.** The method according to any one of claims 1 to3, wherein the receiving, by a terminal device (800), first indication information sent by the network device (700) comprises:

receiving, by the terminal device (800), the first indication information sent by the network device (700) on N CCs in the M CCs, wherein N is an integer greater than or equal to 1, and N is less than or equal to M.

**5.** The method according to claim 4, wherein the receiving, by the terminal device (800), the first indication information sent by the network device (700) on N CCs in the M CCs comprises:

receiving, by the terminal device (800), the first indication information sent by the network device (700) on each of the N CCs; or
receiving, by the terminal device (800), on each of the N CCs a part of the first indication information sent by the network device (700), wherein the first indication information consists of N parts of the first indication information.

**6.** The method according to claim 4 or 5, wherein the method further comprises: receiving, by the terminal device (800), second configuration information sent by the network device (700), wherein N and the N CCs are configured based on the second configuration information; or wherein transmission directions of slot formats of all CCs comprised in the M CCs do not comprise both an uplink direction and a downlink direction at a same time domain location.

**7.** A slot format indication method, wherein the method comprises:

generating, by a network device (700), first indication information; and
sending, by the network device (700), the first indication information to a terminal device (800), wherein the first indication information indicates K slot formats, the K slot formats are slot formats of M component carriers CCs configured for the terminal device (800), and K is an integer greater than or equal to 1 and less than or equal to M, and M is an integer greater than 1,
**characterized in that**
at least one slot format in the K slot formats is corresponding to at least two CCs in the M CCs, configuration parameters of the at least two CCs have at least one type of same parameter the configuration parameters comprise at least one of the following parameters: a subcarrier spacing, a cyclic prefix, a bandwidth, or a frequency band,
wherein that the first indication information indicates K slot formats comprises: the first indication information indicates a first slot format combination manner, wherein the first slot format combination manner is a combination of slot formats corresponding to K types of parameters, and K is a type quantity of parameters corresponding to the M CCs.

**8.** The method according to claim 7, wherein that the first indication information indicates K slot formats comprises: the first indication information comprises H fields, and each of K fields in the H fields indicates one slot format in the K slot formats, wherein H is a positive integer greater than or equal to K; or

wherein the sending, by the network device (700), first indication information to the terminal device (800) comprises: sending, by the network device (700), the first indication information on N CCs in the M CCs, wherein N is an integer greater than or equal to 1, and N is less than or equal to M; or
wherein in slot formats of all CCs comprised in the M CCs, transmission directions at a same time domain location do not comprise both an uplink direction and a downlink direction.

**9.** The method according to claim 8, before the sending, by the network device, the first indication information to the terminal device (800), further comprising:

sending, by the network device (700), first configuration information to the terminal device (800), wherein the first configuration information comprises or indicates at least one of the following information: a value of H, a parameter corresponding to each of the H fields, and one or more configurable slot formats.

**10.** The method according to claim 8, wherein the sending, by the network device (700), the first indication information on N CCs in the M CCs comprises:

sending, by the network device (700), the first indication information on each of the N CCs; or sending, by the network device (700), a part of the first indication information on each of the N CCs, wherein the first indication information consists of N parts of the first indication information; or wherein the method further comprises: Sending, by the network device (700), second configuration information to the terminal device (800), wherein the second configuration information is used to configure N and the N CCs.

**11.** A terminal device (700), comprising a processor (701), a memory (703), and a transceiver (702), wherein

the memory (703) is configured to store a program;
the transceiver (702) is configured to send and receive data; and
the processor (701) is configured to: invoke and execute the program stored in the memory (703), and send and receive data by using the transceiver (702), to implement the method according to any one of claims 1 to 6.

**12.** A network device (800), comprising a processor (801), a memory (803), and a transceiver (802), wherein

the memory (803) is configured to store a program;
the transceiver (802) is configured to send and receive data; and
the processor (801) is configured to: invoke and execute the program stored in the memory (803), and send and receive data by using the transceiver (802), to implement the method according to any one of claims 7 to 10.

**13.** A communications system, comprising the terminal device (700) according to claim 11 and the network device (800) according to claim 12.

**14.** A chip, wherein the chip is connected to a memory (703, 803), and is configured to read and execute a program stored in the memory (703, 803), to implement the method according to any one of claims 1 to 10.

**15.** A computer storage medium, wherein the computer storage medium stores a program, and when the program is executed by a processor, the method according to any one of claims 1 to 10 is implemented.

**Patentansprüche**

**1.** Verfahren zur Schlitz-Formatanzeige, wobei das Verfahren Folgendes umfasst:

Empfangen von ersten Anzeigeinformationen durch ein Endgerät (800), die durch ein Netzwerkgerät (700) gesendet werden, wobei die ersten Anzeigeinformationen K Schlitzformate anzeigen, die K Schlitzformate Schlitzformate von M Komponententrägern (component carriers, CC) sind, die für das Endgerät (800) konfiguriert sind, und K eine ganze Zahl größer oder gleich 1 und kleiner oder gleich M ist, M eine ganze Zahl größer als 1 ist; und
Bestimmen der Schlitzformate der M CCs durch das Endgerät (800) basierend auf den ersten Anzeigeinformationen,
**dadurch gekennzeichnet, dass**
mindestens ein Schlitzformat in den K Schlitzformaten mindestens zwei CCs in den M CCs entspricht,
Konfigurationsparameter der mindestens zwei CCs mindestens einen Typ desselben Parameters aufweisen und
die Konfigurationsparameter mindestens einen der folgenden Parameter umfassen: einen Unterträgerabstand, ein zyklisches Präfix, eine Bandbreite oder ein Frequenzband,
wobei die ersten Anzeigeinformationen eine erste Schlitzformat-Kombinationsart anzeigen, wobei die erste Schlitzformat-Kombinationsart eine Kombination von Schlitzformaten ist, die K Typen von Parametern entsprechen, und K eine Typenmenge von Parametern ist, die den M CCs entsprechen.

**2.** Verfahren gemäß Anspruch 1, wobei dass die ersten Anzeigeinformationen K Schlitzformate anzeigen Folgendes umfasst:
die ersten Anzeigeinformationen umfassen H Felder, und jedes der K Felder in den H Feldern zeigt ein Schlitzformat in den K Schlitzformaten an, wobei H eine positive ganze Zahl größer oder gleich K ist.

**3.** Verfahren gemäß Anspruch 2, ferner vor dem Empfangen von ersten Anzeigeinformationen durch ein Endgerät (800), die durch das Netzwerkgerät (700) gesendet werden, Folgendes umfassend:
Empfangen von ersten Konfigurationsinformationen durch das Endgerät (800), die durch das Netzwerkgerät (700) gesendet werden, wobei die ersten Konfigurationsinformationen mindestens eine der folgenden Informationen umfassen oder anzeigen: einen Wert von H, einen Parameter, der jedem der H Felder entspricht, und ein oder mehrere konfigurierbare Schlitzformate.

**4.** Verfahren gemäß einem der Ansprüche 1 bis 3, wobei das Empfangen von ersten Anzeigeinformationen durch ein Endgerät (800), die durch das Netzwerkgerät (700) gesendet werden, Folgendes umfasst:
Empfangen der ersten Anzeigeinformationen durch das Endgerät (800), die durch das Netzwerkgerät (700) auf N CCs in den M CCs gesendet werden, wobei N eine ganze Zahl größer oder gleich 1 ist und N kleiner oder gleich M ist.

**5.** Verfahren gemäß Anspruch 4, wobei das Empfangen der ersten Anzeigeinformationen durch das Endgerät (800), die durch das Netzwerkgerät (700) auf N CCs in den M CCs gesendet wird, Folgendes umfasst:

Empfangen der ersten Anzeigeinformationen durch das Endgerät (800), die durch das Netzwerkgerät (700) auf jedem der N CCs gesendet wird; oder
Empfangen auf jedem der N CCs eines Teils der ersten Anzeigeinformationen durch das Endgerät (800), die durch das Netzwerkgerät (700) gesendet werden, wobei die ersten Anzeigeinformationen aus N Teilen der ersten Anzeigeinformationen bestehen.

**6.** Verfahren gemäß Anspruch 4 oder 5, wobei das Verfahren ferner Folgendes umfasst:

Empfangen von zweiten Konfigurationsinformationen durch das Endgerät (800), die durch das Netzwerkgerät (700) gesendet werden, wobei N und die N CCs basierend auf den zweiten Konfigurationsinformationen konfiguriert sind; oder
wobei Übertragungsrichtungen von Schlitzformaten aller CCs, die in den M CCs umfasst sind, nicht sowohl eine Uplink-Richtung als auch eine Downlink-Richtung an einem gleichen Zeitbereichsstandort umfassen.

**7.** Verfahren zur Schlitz-Formatanzeige, wobei das Verfahren Folgendes umfasst:

Generieren von ersten Anzeigeinformationen durch ein Netzwerkgerät (700); und
Senden der ersten Anzeigeinformationen durch das Netzwerkgerät (700) an ein Endgerät (800), wobei die ersten Anzeigeinformationen K Schlitzformate anzeigen, die K Schlitzformate Schlitzformate von M Komponententrägern CC sind, die für das Endgerät (800) konfiguriert sind, und K eine ganze Zahl größer oder gleich 1 und kleiner oder gleich M ist, und M eine ganze Zahl größer als 1 ist,
**dadurch gekennzeichnet, dass**
mindestens ein Schlitzformat in den K Schlitzformaten mindestens zwei CCs in den M CCs entspricht, Konfigurationsparameter der mindestens zwei CCs mindestens einen Typ desselben Parameters aufweisen
die Konfigurationsparameter mindestens einen der folgenden Parameter umfassen: einen Unterträgerabstand, ein zyklisches Präfix, eine Bandbreite oder ein Frequenzband,
wobei dass die ersten Anzeigeinformationen K Schlitzformate anzeigen Folgendes umfasst:
die ersten Anzeigeinformationen zeigen eine erste Schlitzformat-Kombinationsart an, wobei die erste Schlitzformat-Kombinationsart eine Kombination von Schlitzformaten ist, die K Typen von Parametern entsprechen, und K eine Typenmenge von Parametern ist, die den M CCs entsprechen.

**8.** Verfahren gemäß Anspruch 7, wobei dass die ersten Anzeigeinformationen K Schlitzformate anzeigen Folgendes umfasst: die ersten Anzeigeinformationen umfassen H Felder, und jedes der K Felder in den H Feldern zeigt ein Schlitzformat in den K Schlitzformaten an, wobei H eine positive ganze Zahl größer oder gleich K ist; oder
wobei das Senden von ersten Anzeigeinformationen durch das Netzwerkgerät (700) an das Endgerät (800) Folgendes umfasst:

Senden der ersten Anzeigeinformationen durch das Netzwerkgerät (700) auf N CCs in den M CCs, wobei N eine ganze Zahl größer oder gleich 1 ist und N kleiner oder gleich M ist; oder
wobei in Schlitzformaten aller CCs, die in den M CCs umfasst sind, Übertragungsrichtungen an einem gleichen Zeitbereichsstandort nicht sowohl eine Uplink-Richtung als auch eine Downlink-Richtung umfassen.

**9.** Verfahren gemäß Anspruch 8, ferner vor dem Senden der ersten Anzeigeinformationen durch das Netzwerkgerät an das Endgerät (800) Folgendes umfassend:
Senden von ersten Konfigurationsinformationen durch das Netzwerkgerät (700) an das Endgerät (800), wobei die ersten Konfigurationsinformationen mindestens eine der folgenden Informationen umfassen oder anzeigen: einen Wert von H, einen Parameter, der jedem der H Felder entspricht, und ein oder mehrere konfigurierbare Schlitzformate.

**10.** Verfahren gemäß Anspruch 8, wobei das Senden der ersten Anzeigeinformationen durch das Netzwerkgerät (700) auf N CCs in den M CCs Folgendes umfasst:

Senden der ersten Anzeigeinformationen durch das Netzwerkgerät (700) auf jedem der N CCs; oder Senden eines Teils der ersten Anzeigeinformationen durch das Netzwerkgerät (700) auf jedem der N CCs, wobei die ersten Anzeigeinformationen aus N Teilen der ersten Anzeigeinformationen bestehen; oder

wobei das Verfahren ferner Folgendes umfasst: Senden zweiter Konfigurationsinformationen durch das Netzwerkgerät (700) an das Endgerät (800), wobei die zweiten Konfigurationsinformationen dazu verwendet werden, N und die N CCs zu konfigurieren.

11. Endgerät (700), umfassend einen Prozessor (701), einen Speicher (703) und einen Sendeempfänger (702), wobei

der Speicher (703) dazu konfiguriert ist, ein Programm zu speichern; der Sendeempfänger (702) dazu konfiguriert ist, Daten zu senden und zu empfangen; und der Prozessor (701) zu Folgendem konfiguriert ist: Aufrufen und Ausführen des in dem Speicher (703) gespeicherten Programms und Senden und Empfangen von Daten unter Verwendung des Sendeempfängers (702), um das Verfahren gemäß einem der Ansprüche 1 bis 6 umzusetzen.

12. Netzwerkgerät (800), umfassend einen Prozessor (801), einen Speicher (803) und einen Sendeempfänger (802), wobei

der Speicher (803) dazu konfiguriert ist, ein Programm zu speichern; der Sendeempfänger (802) dazu konfiguriert ist, Daten zu senden und zu empfangen; und der Prozessor (801) zu Folgendem konfiguriert ist: Aufrufen und Ausführen des in dem Speicher (803) gespeicherten Programms und Senden und Empfangen von Daten unter Verwendung des Sendeempfängers (802), um das Verfahren gemäß einem der Ansprüche 7 bis 10 umzusetzen.

13. Kommunikationssystem, umfassend das Endgerät (700) gemäß Anspruch 11 und das Netzwerkgerät (800) gemäß Anspruch 12.

14. Chip, wobei der Chip mit einem Speicher (703, 803) verbunden ist und dazu konfiguriert ist, ein in dem Speicher (703, 803) gespeichertes Programm zu lesen und auszuführen, um das Verfahren gemäß einem der Ansprüche 1 bis 10 umzusetzen.

15. Computerspeichermedium, wobei das Computerspeichermedium ein Programm speichert und, wenn das Programm durch einen Prozessor ausgeführt wird, das Verfahren gemäß einem der Ansprüche 1 bis 10 umgesetzt wird.

**Revendications**

1. Procédé d'indication de format de créneau, dans lequel le procédé comprend :

la réception, par un dispositif terminal (800), de premières informations d'indication envoyées par un dispositif réseau (700), dans lequel la première information d'indication indique K formats de créneau, les K formats de créneau sont des formats de créneau de M porteuses composantes CC configurées pour le dispositif terminal (800), et K est un entier supérieur ou égal à 1 et inférieur ou égal à M, M est un entier supérieur à 1 ; et

la détermination par le dispositif terminal (800), des formats de créneau des M CC sur la base des premières informations d'indication, **caractérisé en ce que** au moins un format de créneau parmi les K formats de créneau correspond à au moins deux CC parmi les M CC, des paramètres de configuration des au moins deux CC ont au moins un type de même paramètre, et les paramètres de configuration comprennent au moins l'un des paramètres suivants : un espacement de sous-porteuse, un préfixe cyclique, une bande passante, ou une bande de fréquence, moyennant quoi la première information d'indication indique un premier mode de combinaison de formats de créneau, dans lequel le premier mode de combinaison de formats de créneau est une combinaison de formats de créneau correspondant à K types de paramètres, et K est une quantité de types de paramètres correspondant aux M CC.

2. Procédé selon la revendication 1, dans lequel le fait que la première information d'indication indique K formats de créneau comprend : la première information d'indication comprend H champs, et chacun des K champs parmi les H champs indique un format de créneau parmi les K formats de créneau, dans lequel H est un entier positif supérieur ou égal à K.

3. Procédé selon la revendication 2, dans lequel avant la réception, par un dispositif terminal (800), de premières informations d'indication envoyées par le dispositif réseau (700), comprenant également :
la réception, par le dispositif terminal (800), de premières informations de configuration envoyées par le dispositif réseau (700), dans lequel la première information de configuration comprend ou indique au moins l'une des informations suivantes : une valeur de H, un paramètre correspondant à chacun des H champs, et un ou plusieurs formats de créneau configurables.

**4.** Procédé selon l'une quelconque des revendications 1 à 3, dans lequel la réception, par un dispositif terminal (800), de premières informations d'indication envoyées par le dispositif réseau (700) comprend :
la réception, par le dispositif terminal (800), des premières informations d'indication envoyées par le dispositif réseau (700) sur N CC parmi les M CC, dans lequel N est un entier supérieur ou égal à 1, et N est inférieur ou égal à M.

**5.** Procédé selon la revendication 4, dans lequel la réception, par le dispositif terminal (800), des premières informations d'indication envoyées par le dispositif réseau (700) sur N CC parmi les M CC comprend :

la réception, par le dispositif terminal (800), des premières informations d'indication envoyées par le dispositif réseau (700) sur chacune des N CC ; ou
la réception, par le dispositif terminal (800), sur chacune des N CC d'une partie des premières informations d'indication envoyées par le dispositif réseau (700), dans lequel la première information d'indication est constituée de N parties des premières informations d'indication.

**6.** Procédé selon la revendication 4 ou 5, dans lequel le procédé comprend également :

la réception, par le dispositif terminal (800), de secondes informations de configuration envoyées par le dispositif réseau (700), dans lequel N et les N CC sont configurés sur la base des secondes informations de configuration ; ou
dans lequel des directions de transmission de formats de créneau de toutes les CC comprises dans les M CC ne comprennent pas à la fois une direction de liaison montante et une direction de liaison descendante à un même emplacement de domaine temporel.

**7.** Procédé d'indication de format de créneau, dans lequel le procédé comprend :

la génération, par un dispositif réseau (700), de premières informations d'indication ; et

l'envoi, par le dispositif réseau (700), de premières informations d'indication envoyées par un dispositif terminal (800), dans lequel la première information d'indication indique K formats de créneau, les K formats de créneau sont des formats de créneau de M porteuses composantes CC configurées pour le dispositif terminal (800), et K est un entier supérieur ou égal à 1 et inférieur ou égal à M, et M est un entier supérieur à 1, **caractérisé en ce que**
au moins un format de créneau parmi les K formats de créneau correspond à au moins deux CC parmi les M CC, des paramètres de configuration des au moins deux CC ont au moins un type de même paramètre
les paramètres de configuration comprennent au moins l'un des paramètres suivants : un espacement de sous-porteuse, un préfixe cyclique, une bande passante, ou une bande de fréquence,
dans lequel le fait que la première information d'indication indique K formats de créneau comprend :
dans lequel la première information d'indication indique un premier mode de combinaison de formats de créneau, dans lequel le premier mode de combinaison de formats de créneau est une combinaison de formats de créneau correspondant à K types de paramètres, et K est une quantité de types de paramètres correspondant aux M CC.

**8.** Procédé selon la revendication 7, dans lequel le fait que la première information d'indication indique K formats de créneau comprend la première information d'indication comprend H champs, et chacun des K champs parmi les H champs indique un format de créneau parmi les K formats de créneau, dans lequel H est un entier positif supérieur ou égal à K ; ou

dans lequel l'envoi, par le dispositif réseau (700), de premières informations d'indication au dispositif terminal (800) comprend : l'envoi, par le dispositif réseau (700), de la première information d'indication sur N CC parmi les M CC, dans lequel N est un entier supérieur ou égal à 1, et N est inférieur ou égal à M ; ou
dans lequel, dans des formats de créneau de toutes les CC comprises dans les M CC, les directions de transmission à un même emplacement de domaine temporel ne comprennent pas à la fois une direction de liaison montante et une direction de liaison descendante.

**9.** Procédé selon la revendication 8, avant l'envoi, par le dispositif réseau, des premières informations d'indication au dispositif terminal (800), comprenant également :

l'envoi, par le dispositif réseau (700), de premières informations de configuration au dispositif terminal (800), dans lequel la première information de configuration comprend ou indique au moins l'une des informations suivantes : une valeur de H, un paramètre correspondant à chacun des H champs, et un ou plusieurs formats de créneau configurables.

10. Procédé selon la revendication 8, dans lequel l'envoi, par le dispositif réseau (700), de la première information d'indication sur N CC parmi les M CC comprend :

l'envoi, par le dispositif réseau (700), de la première information d'indication sur chacune des N CC ; ou l'envoi, par le dispositif réseau (700), d'une partie de la première information d'indication sur chacune des N CC, dans lequel la première information d'indication est constituée de N parties de la première information d'indication ; ou

dans lequel le procédé comprend également : l'envoi, par le dispositif réseau (700), de secondes informations de configuration au dispositif terminal (800), dans lequel la seconde information de configuration est utilisée pour configurer N et les N CC.

11. Dispositif terminal (700), comprenant un processeur (701), une mémoire (703), et un émetteur-récepteur (702), dans lequel la mémoire (703) est configurée pour stocker un programme ;

l'émetteur-récepteur (702) est configuré pour envoyer et recevoir des données ; et le processeur (701) est configuré pour : invoquer et exécuter le programme stocké dans la mémoire (703), et envoyer et recevoir des données à l'aide de l'émetteur-récepteur (702), pour mettre en œuvre le procédé selon l'une quelconque des revendications 1 à 6.

12. Dispositif réseau (800), comprenant un processeur (801), une mémoire (803), et un émetteur-récepteur (802), dans lequel

la mémoire (803) est configurée pour stocker un programme ; l'émetteur-récepteur (802) est configuré pour envoyer et recevoir des données ; et le processeur (801) est configuré pour : invoquer et exécuter le programme stocké dans la mémoire (803), et envoyer et recevoir des données à l'aide de l'émetteur-récepteur (802), pour mettre en œuvre le procédé selon l'une quelconque des revendications 7 à 10.

13. Système de communication, comprenant le dispositif terminal (700) selon la revendication 11 et le dispositif réseau (800) selon la revendication 12.

14. Puce, dans laquelle la puce est connectée à une mémoire (703, 803), et est configurée pour lire et exécuter un programme stocké dans la mémoire (703, 803), pour mettre en œuvre le procédé selon l'une quelconque des revendications 1 à 10.

15. Support de stockage informatique, dans lequel le support de stockage informatique stocke un programme, et lorsque le programme est exécuté par un processeur, le procédé selon l'une quelconque des revendications 1 à 10 est mis en œuvre.

Slot format 1  Slot format 2  Slot format 3  Slot format 4

Slot format 5  Slot format 6  Slot format 7  Slot format 8

Slot format 9  Slot format 10  Slot format 11  Slot format 12

Legend

Downlink part

Uplink part

Unknown part
(unknown)

FIG. 1

Base station

Terminal device ··· Terminal device

FIG. 2a

Base station

Base station

Terminal device ··· Terminal device

FIG. 2b

| Base station | | Terminal device |
|---|---|---|

Step 300. Generate first indication information

Step 301. First indication information

Step 302. Determine, based on the first indication information, slot formats of M CCs configured for a terminal device

FIG. 3

First indication information

| Field 1 | Field 2 | Field 3 | Field 4 | Field 5 |
|---|---|---|---|---|

FIG. 4a

First indication information

| Field 1 | Field 2 | Field 3 |
|---|---|---|

FIG. 4b

FIG. 5

Slot corresponding to 30 KHz — Slot corresponding to 15 KHz — Slot format combination 1

Slot corresponding to 30 KHz — Slot corresponding to 15 KHz — Slot format combination 2

Slot corresponding to 30 KHz — Slot corresponding to 15 KHz — Slot format combination 3

Slot corresponding to 30 KHz — Slot corresponding to 15 KHz — Slot format combination 4

Slot corresponding to 30 KHz — Slot corresponding to 15 KHz — Slot format combination 4

Slot corresponding to 30 KHz — Slot corresponding to 15 KHz — Slot format combination 5

Slot corresponding to 30 KHz — Slot corresponding to 15 KHz — Slot format combination 6

Slot corresponding to 30 KHz — Slot corresponding to 15 KHz — Slot format combination 8

Legend

Downlink part

Uplink part

Unknown part (unknown)

FIG. 6

700

701          702

| Processing module | | Transceiver module |

FIG. 7a

700

Processor 701

Transceiver 702

Memory 703

FIG. 7b

800

801          802

| Processing module | | Transceiver module |

FIG. 8a

800

Processor
801

Transceiver
802

Memory
803

FIG. 8b

700

800

Network device

Terminal device

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LG ELECTRONICS**. Discussion on the contents of group common PDCCH. *3GPP DRAFT; R1-1713171 DISCUSSION ON THE CONTENTS OF GROUP COMMON PDCCH, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX*, 20 August 2017, vol. RAN WG1 (Prague)